# EUROPEAN PATENT SPECIFICATION

(11) **EP 3 226 102 B1**
(45) Date of publication and mention of the grant of the patent: **05.01.2022**
(21) Application number: 17163350.6
(22) Date of filing: 28.03.2017
(51) Int. Cl.: G06F 1/16, H04B 1/3888, H04M 1/04, A45C 11/00

(54) **ACCESSORY FOR PORTABLE ELECTRONIC DEVICE**
ZUBEHÖR FÜR EINE TRAGBARE ELEKTRONISCHE VORRICHTUNG
ACCESSOIRE POUR DISPOSITIF ÉLECTRONIQUE PORTABLE

(30) Priority: 28.03.2016 US 201662313827 P; 02.03.2017 US 201715447139
(43) Date of publication of application: 04.10.2017
(73) Proprietor: HTC Corporation, Taoyuan City 330 (TW)
(72) Inventor: HINTERMANN, Mathias Andreas, Taoyuan District, Taoyuan City 330 (TW)
(74) Representative: Carstens, Dirk Wilhelm

(56) References cited:
- EP-A2- 2 302 658
- EP-A2- 2 779 471
- CN-U- 203 524 031
- US-A1- 2015 357 065

## Description

### Field of the Application

The application is related to an accessory, and particularly related to an accessory for portable electronic devices.

### Description of Related Art

With multi-functions and slim design, portable electronic devices such as smart phones and tablet computers are popular with consumers, and so are related accessories. In particular, accessories such as protection case and protection cover are most popular with consumers. A type of protection case is designed in the form of wallet or book cover, and such protection case covers the display (e.g. touch display screen) of the portable electronic device via the cover body of the protection case to avoid possible damage to the display. Likewise, a protection cover also has a cover body that can realize the function of protection; however, such a protection cover needs to be equipped with a magnet to be sensed by the portable electronic device. The portable electronic device senses the protection cover on the display via a Hall sensor or magnet sensor.

EP 2 779 471 A2 discloses an electronic device, wherein the electronic device includes a connector detachable from part of an electronic device including a display, and a cover connected to the connector, wherein the cover is capable of covering at least part of the display of the electronic device, and wherein the cover includes a window configured to expose the at least part of the display when the cover covers at least part of the display. The cover comprises a front cover and a rear cover. A magnet is disposed in the front cover, and a magnetic force detecting element is disposed at a position of the electronic device in order to detect the magnetic force of the magnet when the front cover is closed so as to contact the display of the electronic device. By virtue of flexibility of a linking part interconnecting the front cover and the rear cover, the front cover can move to cover the rear cover of the electronic device from behind. Shielding units are configured to not allow detection of the magnetic force of the magnet when the front cover is rotated to cover the rear cover.

CN 203 524 031 U discloses a protective jacket of a mobile terminal. A Hall switch is arranged in the mobile terminal, and a first magnet is arranged in a front cover of the protective jacket of the mobile terminal. In addition, a first magnetism isolating panel is further arranged in the front cover. When the front face of the front cover is closed, the first magnetism isolating panel and the first magnet are sequentially attached from top to bottom. According to the technical scheme provided by the utility model, when the front cover of the protective jacket of the mobile terminal is closed on the back toward a bottom shell, the first magnetism isolating panel isolates the first magnet and the Hall switch. The Hall switch does not misjudge black screen.

EP 2 302 658 A2 discloses a technique for shielding electromagnetic waves from cellular/cordless phones, TVs and computer screens, and to electromagnetic shielding spectacles, face shields and screen protectors. The electromagnetic shielding is obtained by blending a transparent material with a ferromagnetic or ferrimagnetic material comprising a single magnetic domain and micro particles with light transparency, such that it can sufficiently shield all kinds of electromagnetic waves including magnetic waves.

US 2015/0357065 A1 discloses a body shield for protecting a user from harmful thermal and electromagnetic radiation. The body shield includes a body portion and a cover having sidewalls. The body portion has a multi-layered core which is surrounded by an outer casing. The multi-layered core includes a first layer of a magnetic metal alloy for shielding extremely low frequency electromagnetic radiation, a second layer of a carbon based material for absorbing higher frequency electromagnetic radiation, and a third layer of a non-magnetic material for conducting higher frequency electromagnetic radiation. The core may be incorporated into a body portion coupled to the device, a cover overlaying the device, or both.

### SUMMARY OF THE INVENTION

The present invention provides an accessory for protecting a portable electronic device and sensing a rear cover on the portable electronic device.

The present invention provides an accessory as set forth in claim 1. Preferred embodiments of the present invention may be gathered from the dependent claims.

Based on the above, in the application, the cover portion of the accessory is transparent or semi-transparent. When the cover portion covers the display of the portable electronic device, the image shown on the display can pass through the cover portion to be seen by the user. In addition, the accessory can be sensed by the sensor of the portable electronic device via a magnetic field of the magnetic portion disposed in the cover portion. When the cover portion is flipped over to the rear side of the portable electronic device, the accessory is capable of blocking the magnetic field of the magnetic portion from being sensed by the sensor of the portable electronic device via the shielding portion disposed in the cover portion. In addition, the accessory may be in contact with the display of the portable electronic device via a soft layer of the cover portion to prevent scratch caused to the display of the portable electronic device.

In order to make the aforementioned features and advantages of the application more comprehensible, embodiments and accompanying figures are described in detail below.

### BRIEF DESCRIPTION OF THE DRAWINGS

FIG. 1 is a schematic view illustrating an accessory and a portable electronic device according to an embodiment of the application separated from each other.
FIG. 2 is a schematic view illustrating the accessory and portable electronic device in FIG. 1 assembled together.
FIG. 3 is a schematic view illustrating a cover portion of the accessory in FIG. 2 covering a display of the portable electronic device.
FIG. 4A is a cross-sectional view illustrating the accessory in FIG. 3 taken along line I-I in FIG. 3.
FIG. 4B is a partial enlargement view of portion 4B in FIG. 4A.
FIG. 5A is a cross-sectional view illustrating a cover portion of the accessory in FIG. 4A being flipped over to the rear side of a coupling portion thereof.
FIG. 5B is a partial enlargement view illustrating portion 5B in FIG. 5A.
FIG. 6 is a partial enlargement view illustrating a cover portion of an accessory according to another embodiment of the application.
FIG. 7 is a partial enlargement view illustrating a cover portion of an accessory according to another embodiment of the application.
FIG. 8 is a partial enlargement view illustrating a cover portion of an accessory according to another embodiment of the application.
FIG. 9 is a schematic view illustrating a cover portion of an accessory according to an example not being part of the present invention.
FIG. 10 is a schematic view illustrating a cover portion of an accessory according to an example not being part of the present invention.

### DESCRIPTION OF EMBODIMENTS

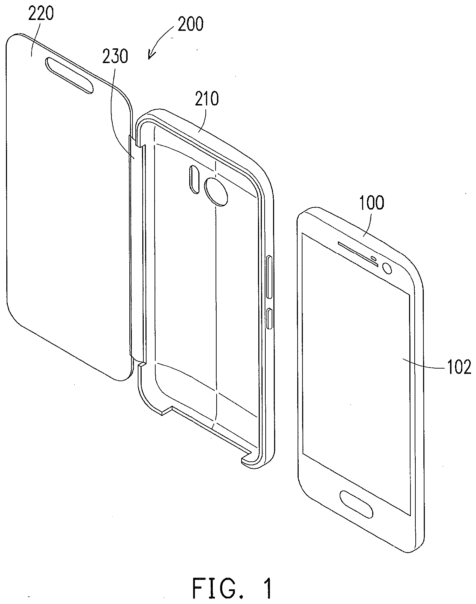

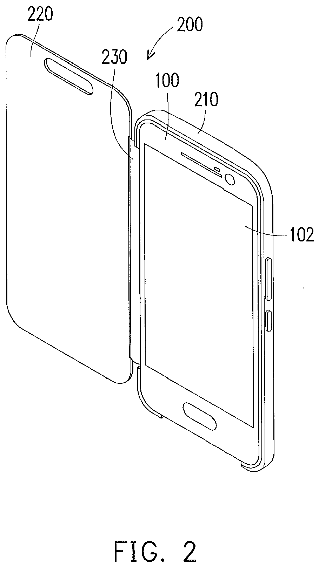

Referring to FIGs. 1-3, an electronic assembly of the embodiment includes a portable electronic device 100 and an accessory 200 for the portable electronic device 100. The accessory 200 may be a cover body which can be flipped over (as shown in FIGs. 2A to 2B). The portable electronic device 100 may be a smart phone, PDA, tablet computer, notebook computer or any portable electronic device having a display. However, in other embodiments that are not shown, the portable electronic device may be a panel device such as a tablet computer or the like. The portable electronic device 100 includes a display 102. The display 102 may be a liquid crystal display (LCD), an electronic ink display or an organic light emitting diode (OLED) display. The display 102 may be the whole display or a portion of the display.

Referring to FIGs. 1-3, the accessory 200 includes a coupling portion 210, a cover portion 220 and a flexible portion 230. The coupling portion 210 is adaptable to be coupled to the portable electronic device 100. The cover portion 220 is connected with the coupling portion 210 and adaptable to cover the display 102 of the portable electronic device 100. The flexible portion 230 connects the cover portion 220 to the coupling portion 210. In particular, the position of cover portion 220 with respect to the coupling portion 210 may be changed via bending the flexible portion 230 to decide whether to cover the display 102 of the portable electronic device 100. The flexible portion 230 and cover portion 220 may be integrally formed as a single element via an injection molding process or any process. The coupling portion 210 may be coupled to the portable electronic device 100 in four corners thereof to fix the coupling portion 210 to the portable electronic device 100.

To couple the coupling portion 210 to the portable electronic device 100 so as to fix the position of the coupling portion 210 with respect to the portable electronic device 100, the coupling portion 210 may be a recess and adaptable to structurally cover the external side and bottom of the portable electronic device 100 so as to fix the position of the coupling portion 210 with respect to the portable electronic device 100. The cover portion 220 and coupling portion 210 may be formed of a material different from the flexible material. The flexible portion 230 may be maintained in a bended shape and recovered to the bended shape after a force is applied thereto.

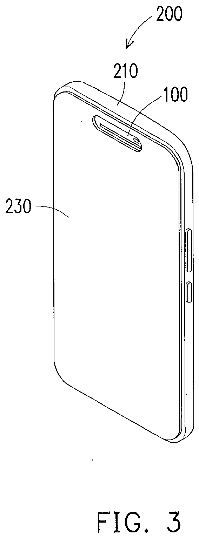

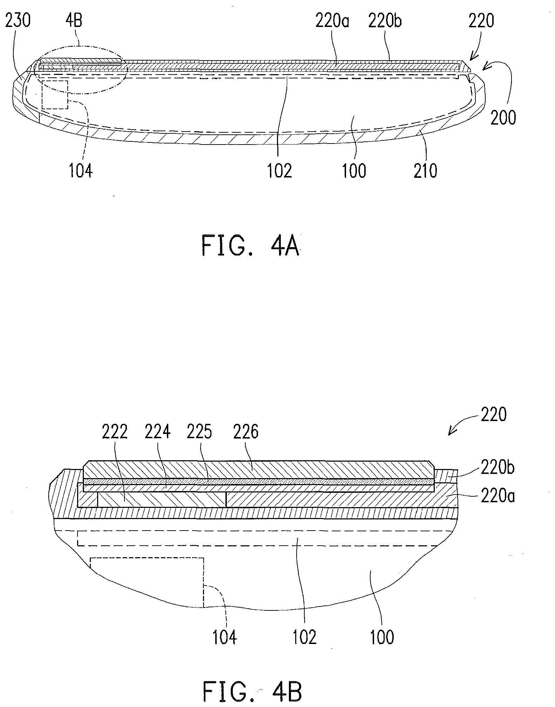

Referring to FIGs. 3, 4A and 4B, to determine whether the cover portion 220 covers the display 102, the portable electronic device 100 includes a sensor 104. The accessory 200 further includes a magnetic portion 222. The determination of whether the display 102 is covered by the cover portion 220 depends on whether the magnetic portion 222 is sensed by the sensor 104. In the embodiment, the sensor 104 may be a magnetic sensor, a Hall effect sensor, or Hall sensor. The magnetic portion 222 may be a permanent magnet, an electrical magnet or magnetic test element. Therefore, the cover portion 220 is capable of covering the display 102 of the portable electronic device 100. The magnetic portion 222 may cover a portion of the cover portion 220, or cover a corresponding position of the sensor 104 disposed in the portable electronic device 100. The sensor 104 is capable of sensing the magnetic pole or magnetic field of the magnetic portion 222.

The position of the magnetic portion 222 may be in the flexible portion 230 or close to the flexible portion 230. The sensor 104 of the portable electronic device 100 may be disposed in the flexible portion 230 or close to the flexible portion 230. When the cover portion 220 is moved from a first position (as shown in FIG. 2) to a second position (as shown in FIG. 3), the magnetic portion 222 is sensed by the sensor 104 of the portable electronic device 100. It should be noted that when the cover portion 220 is moved, as compared with an opposite side of the cover portion 220 away from the flexible portion 230, the displacement of the cover portion 220 is less at one side where the flexible portion 230 is disposed. Therefore, the disposition of the magnetic portion 222 may be close to the flexible portion 230 such that the possibility of erroneous detection caused by sudden move of the cover portion 220 may be reduced. In the embodiment, the cover portion 220 may include a logo piece 226, and the magnetic portion 222 may be disposed under the logo piece 226.

Referring to FIGs. 3, 4A and 4B, the accessory 200 further includes a shielding portion 224. The shielding portion 224 may be disposed above the magnetic portion 222 and overlap the magnetic portion 222. When the cover portion 220 covers the display 102 of the portable electronic device 100, the magnetic portion 222 is disposed between the shielding portion 224 and portable electronic device 100. The cover portion 220 may be flipped over to the rear side of the coupling portion 210 by twisting or turning the flexible portion 230.

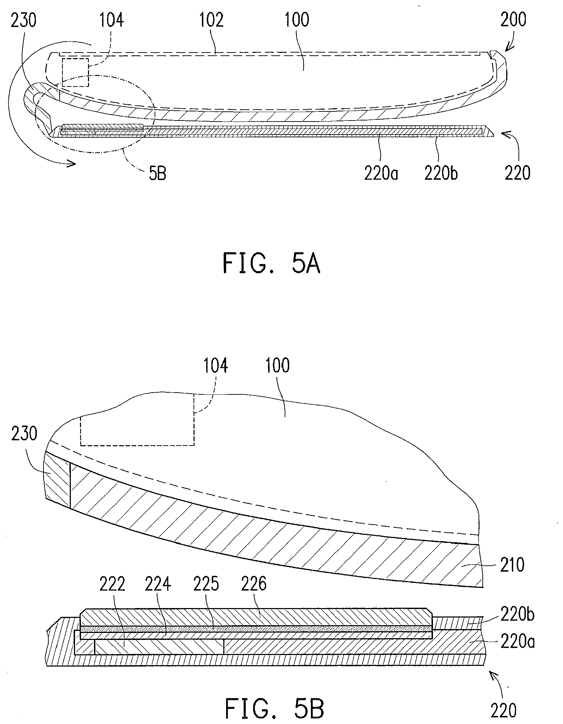

Referring to FIGs. 5A and 5B, when the cover portion 220 is flipped over to the rear surface of the portable electronic device 100, the shielding portion 224 is disposed between the magnetic portion 222 and portable electronic device 100. Therefore, the shielding portion 224 is capable of interfering detection of the sensor 104 from the rear side of the coupling portion 210. By disposing the shielding portion 224 at a position where the coupling portion 210 corresponds to the sensor 104 in the coupling portion 210, the shielding portion 224 blocks the magnetic field of the magnetic portion 222.

Further referring to FIGs. 3, 4A and 4B, the magnetic portion 222 is disposed within the cover portion 220. The cover portion 220 further includes a hard layer 220a. The magnetic portion 222 is disposed on the hard layer 220a and the shielding portion 224 is disposed above the magnetic portion 222. Specifically, the magnetic portion 222 may be disposed within an opening of the hard layer 220a. A gel may be used to adhere to the shielding portion 224 and magnetic portion 222 to the hard layer 220a. The logo piece 226 may be disposed on the shielding portion 224 with an adhesive layer 225 disposed therebetween. The logo piece 226 is disposed in the cover portion 220 and overlaps the shielding portion 224. However, the logo piece 226 is not necessarily disposed on the shielding portion 224; the logo piece 226 may be disposed at other positions of the cover portion 220. When the hard layer 220a is completely transparent or semi-transparent, light can pass through the cover portion 220, and the image shown on the display 102 of the portable electronic device 100 can pass through the cover portion 220 to be seen by the user. In addition, when the hard layer 220a, magnetic portion 222 and shielding portion 224 are completely transparent or semi-transparent, light can pass through the cover portion 220 (including magnetic portion 222 and shielding portion 224), and the image shown on the display 102 of the portable electronic device 100 can pass through the cover portion 220 to be seen by the user. In the embodiment, the logo piece 226 may be completely transparent or semi-transparent.

According to the invention, the magnetic portion 222 is formed of a transparent material mixed with a magnetic material. In other words, the magnetic portion 222 is constituted by a transparent material and a magnetic material mixed therein.

When the shielding portion 224 is completely transparent or semi-transparent, the shielding portion 224 may be an ITO (indium tin oxide) substrate or glass. The substrate may be polymer or a material coated with an ITO pattern or structural layer. In addition, the shielding portion 224 may be formed of a transparent material mixed with a shielding material. That is, the shielding portion 224 may be constituted by a transparent material and a shielding material mixed therein.

The cover portion 220 further includes a soft layer 220b which is completely transparent or semi-transparent. The hard layer 220a, magnetic portion 222 and shielding portion 224 may be disposed within the soft layer 220b. The soft layer 220b may be completely transparent or semi-transparent. As compared with the hard layer 220a, the soft layer 220b is softer and may have different color or different transparency to form the cover portion 220 that exhibits a special visual effect as a whole. Likewise, when the magnetic portion 222 and shielding portion 224 are completely transparent or semi-transparent, the magnetic portion 222 and shielding portion 224 may also have different color or different transparency to form the cover portion 220 that exhibits a special visual effect as a whole.

According to an example not being part of the present invention, when the magnetic portion 222 and shielding portion 224 are non-transparent, the magnetic portion 222 may be a magnet. The shielding portion 224 may be any ferromagnetic metal, i.e. any object that contains iron, nickel, or cobalt. The shielding portion 224 serves as a magnetic shielding that blocks the magnetic field on the rear side of the coupling portion 210 for the sensor 104.

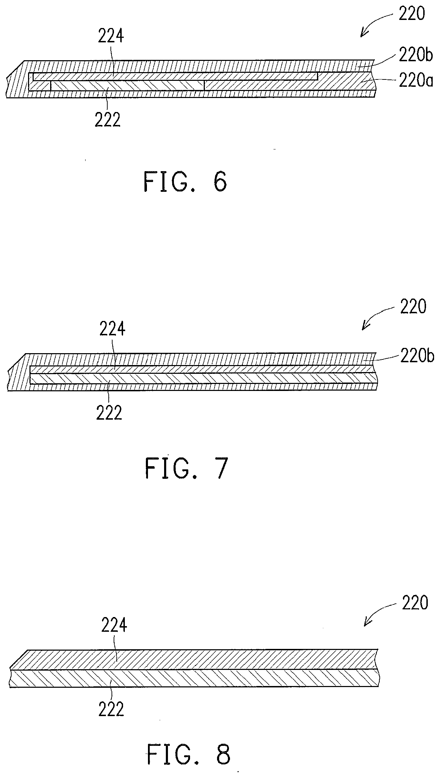

Referring to FIG. 6, as compared with the embodiment in FIG. 3, the cover portion 220 does not include the logo piece in FIG. 3; thus, the soft layer 220b may cover the shielding portion 224 to maintain flatness of the appearance of cover portion 220.

Referring to FIG. 7, in the embodiment, the magnetic portion 222 and shielding portion 224 may be disposed together within the cover portion 220. Specifically, the magnetic portion 222 and shielding portion 224 may be similarly constituted as the hard layer 220a in FIG. 3 and be covered by the soft layer 220b. To allow light to pass through the cover portion 220, the hard layer 220a, soft layer 220b, magnetic portion 222 and shielding portion 224 may be completely transparent or semi-transparent.

Referring to FIG. 8, in the embodiment, the magnetic portion 222 may be a structural layer of the cover portion 220, forming into a structure of the cover portion 220 that covers the display 102. In other words, the magnetic portion 222 may be the cover portion 220, and the magnetic portion 222 may a large structural layer that covers the entire display 102. The shielding portion 224 is disposed above the magnetic portion 222. The position of the magnetic portion 222 may be between the shielding portion 224 and portable electronic device 100. The magnetic portion 222 and shielding portion 224 together may form the whole cover portion 220. To allow light to pass through the cover portion 220, the magnetic portion 222 and shielding portion 224 may be completely transparent or semi-transparent.

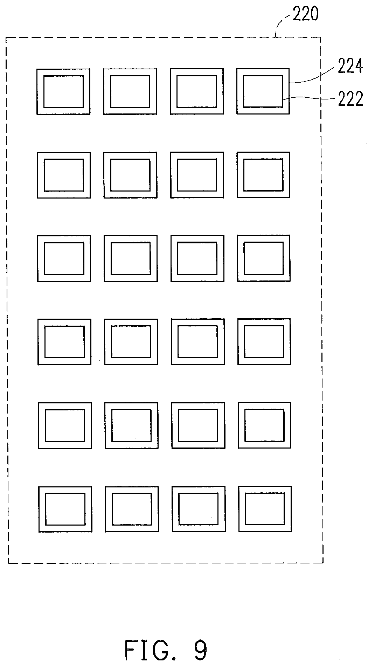

Referring to FIG. 9, according to a further example not being part of the present invention, the magnetic portion 222 may include a plurality of magnetic layers that are arranged in array or matrix on the cover portion 220. The shielding portion 224 may also include a plurality of shielding layers that are arranged in array or matrix corresponding to the magnetic portion 222 on the cover portion 220. With such configuration, the magnetic layers 222a or shielding layers 224a may be completely transparent or semi-transparent.

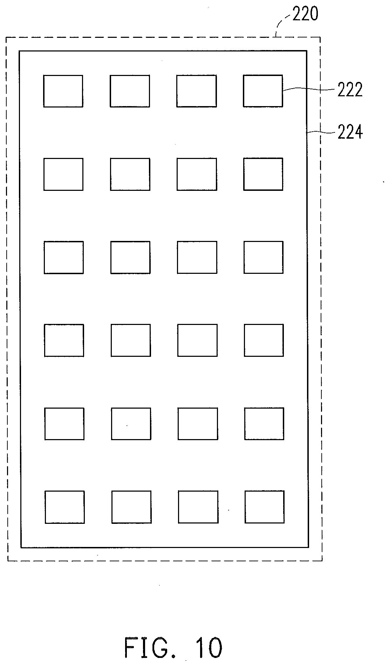

Referring to FIG. 10, according to another example not being part of the present invention, the shielding portion 224 may also include a single shielding layer 224a which includes the magnetic layers 222a of the magnetic portion 222 and is disposed on the cover portion 220. With such configuration, the magnetic layers 222a and shielding layers 224a may be completely transparent or semi-transparent.

Although the invention has been illustrated by the above embodiments, the embodiments are not intended to limit the invention. It will be apparent to those skilled in the art that various modifications and variations can be made to the invention without departing from the scope of the invention as defined by the appended claims.

## Claims

1. An accessory (200), adapted for a portable electronic device (100), the portable electronic device (100) comprising a display (102) and a rear surface facing away from the display (102), the accessory (200) comprising:
a cover portion (220) being transparent or semi-transparent and adaptable to cover the display (102) of the portable electronic device (100);
a magnetic portion (222), disposed within the cover portion (220), wherein the magnetic portion (222) is constituted by a transparent material and a magnetic material mixed therein; and
a shielding portion (224), disposed within the cover portion (220),
wherein when the cover portion (220) covers the display (102) of the portable electronic device (100), the magnetic portion (222) is disposed between the shielding portion (224) and the portable electronic device (100), and when the cover portion (220) is flipped over to the rear surface of the portable electronic device (100), the shielding portion (224) is disposed between the magnetic portion (222) and the portable electronic device (100),
wherein the magnetic portion (222) is configured to produce a magnetic field being detectable by a sensor (104) of the portable electronic device (100) when the magnetic portion is disposed between the shielding portion (224) and the portable electronic device (100), and
wherein the shielding portion (224) blocks the magnetic field of the magnetic portion (222) from being detectable by the sensor of the portable electronic device when the shielding portion (224) is between the magnetic portion (222) and the portable electronic device (100).

2. The accessory according to claim 1, wherein the shielding portion (224) comprises a transparent substrate and a transparent conductive layer disposed on the transparent substrate.

3. The accessory according to claim 1, wherein the shielding portion (224) is constituted by a transparent material and a shielding material mixed therein.

4. The accessory according to claim 1, wherein the cover portion (220) comprises a hard layer (220a) and a soft layer (220b) covering the hard layer (220a).

5. The accessory according to claim 4, wherein the magnetic portion (222) is disposed within an opening of the hard layer (220a).

6. The accessory according to claim 4, wherein the shielding portion (224) and the magnetic portion (222) are overlapped.

7. The accessory according to claim 4, wherein the shielding portion (224) is transparent or semi-transparent.

8. The accessory according to claim 1 or 4, further comprising:
a logo piece (226), disposed in the cover portion (220) and overlapping the shielding portion (224).

9. The accessory according to claims 1 or 4, further comprising:
a coupling portion (210), connected with the cover portion (220) and adapted to be coupled to the portable electronic device (100).

10. The accessory according to claim 9, further comprising:
a flexible portion (230), connecting the cover portion (220) to the coupling portion (210).

## Patentansprüche

1. Zubehör (200), das für eine tragbare elektronische Vorrichtung (100) geeignet ist, wobei die tragbare elektronische Vorrichtung (100) eine Anzeige (102) und eine Rückseite aufweist, die von der Anzeige (102) weg weist, wobei das Zubehör (200) Folgendes aufweist:
einen Abdeckungsteil (220), der transparent oder semi-transparent ist und anpassbar ist, um die Anzeige (102) der tragbaren elektronischen Vorrichtung (100) zu bedecken;
einen magnetischen Teil (222), der innerhalb des Abdeckungsteils (220) angeordnet ist, wobei der magnetische Teil (222) durch ein transparentes Material und ein darin eingemischtes magnetisches Material gebildet wird; und
einen Abschirmungsteil (224), der innerhalb des Abdeckungsteils (220) angeordnet ist,
wobei, wenn der Abdeckungsteil (220) die Anzeige (102) der tragbaren elektronischen Vorrichtung (100) bedeckt, der magnetische Teil (222) zwischen dem Abschirmungsteil (224) und der tragbaren elektronischen Vorrichtung (100) angeordnet ist, und wobei, wenn der Abdeckungsteil (220) zur Rückseite der tragbaren elektronischen Vorrichtung (100) umgeklappt ist, der Abschirmungsteil (224) zwischen dem magnetischen Teil (222) und der tragbaren elektronischen Vorrichtung (100) angeordnet ist,
wobei der magnetische Teil (222) konfiguriert ist, um ein Magnetfeld zu erzeugen, welches durch einen Sensor (104) der tragbaren elektronischen Vorrichtung (100) detektiert werden kann, wenn der magnetische Teil zwischen dem Abschirmungsteil (224) und der tragbaren elektronischen Vorrichtung (100) angeordnet ist, und
wobei der Abschirmungsteil (224) das Magnetfeld des magnetischen Teils (220) dagegen abblockt, dass dieses durch den Sensor der tragbaren elektronischen Vorrichtung detektierbar ist, wenn der Abschirmungsteil (224) zwischen dem magnetischen Teil (222) und der tragbaren elektronischen Vorrichtung (100) ist.

2. Zubehör nach Anspruch 1, wobei der Abschirmungsteil (224) ein transparentes Substrat und eine transparente leitfähige Schicht aufweist, die auf dem transparenten Substrat angeordnet ist.

3. Zubehör nach Anspruch 1, wobei der Abschirmungsteil (224) durch ein transparentes Material und ein darin eingemischtes Abschirmungsmaterial gebildet wird.

4. Zubehör nach Anspruch 1, wobei der Abdeckungsteil (220) eine harte Schicht (220a) und eine weiche Schicht (220b) aufweist, welche die harte Schicht (220a) bedeckt.

5. Zubehör nach Anspruch 4, wobei der magnetische Teil (222) innerhalb einer Öffnung der harten Schicht (220a) angeordnet ist.

6. Zubehör nach Anspruch 4, wobei der Abschirmungsteil (224) und der magnetische Teil (222) überlappt sind.

7. Zubehör nach Anspruch 4, wobei der Abschirmungsteil (224) transparent oder semi-transparent ist.

8. Zubehör nach Anspruch 1 oder 4, das weiter Folgendes aufweist:
einen Logoteil (226), der in dem Abdeckungsteil (220) angeordnet ist und den Abschirmungsteil (224) überlappt.

9. Zubehör nach den Ansprüchen 1 oder 4, das weiter Folgendes aufweist:
einen Koppelungsteil (210), der mit dem Abdeckungsteil (220) verbunden ist und ausgebildet ist, um mit der tragbaren elektronischen Vorrichtung gekoppelt zu werden.

10. Zubehör nach Anspruch 9, das weiter Folgendes aufweist:
einen flexiblen Teil (230), der den Abdeckungsteil (220) mit dem Koppelungsteil (210) verbindet.

## Revendications

1. Accessoire (200), adapté pour un dispositif électronique portable (100), le dispositif électronique portable (100) comprenant un affichage (102) et une surface arrière tournée à l'opposé de l'affichage (102), l'accessoire (200) comprenant :
une partie de couvercle (220) qui est transparente ou semi-transparente et adaptable pour couvrir l'affichage (102) du dispositif électronique portable (100) ;
une partie magnétique (222), disposée à l'intérieur de la partie de couvercle (220), dans lequel la partie magnétique (222) est constituée d'un matériau transparent et d'un matériau magnétique mélangé à l'intérieur ; et
une partie de blindage (224), disposée à l'intérieur de la partie de couvercle (220),
dans lequel, lorsque la partie de couvercle (220) recouvre l'affichage (102) du dispositif électronique portable (100), la partie magnétique (222) est disposée entre la partie de blindage (224) et le dispositif électronique portable (100), et, lorsque la partie de couvercle (220) est retournée vers la surface arrière du dispositif électronique portable (100), la partie de blindage (224) est disposée entre la partie magnétique (222) et le dispositif électronique portable (100),
dans lequel la partie magnétique (222) est configurée pour produire un champ magnétique qui est détectable par un capteur (104) du dispositif électronique (100) lorsque la partie magnétique est disposée entre la partie de blindage (224) et le dispositif électronique portable (100), et
dans lequel la partie de blindage (224) bloque la détection du champ magnétique de la partie magnétique (222) par le capteur du dispositif électronique portable lorsque la partie de blindage (224) est entre la partie magnétique (222) et le dispositif électronique portable (100).

2. Accessoire selon la revendication 1, dans lequel la partie de blindage (224) comprend un substrat transparent et une couche conductrice transparente disposée sur le substrat transparent.

3. Accessoire selon la revendication 1, dans lequel la partie de blindage (224) est constituée d'un matériau transparent et d'un matériau de blindage mélangé dans celui-ci.

4. Accessoire selon la revendication 1, dans lequel la partie de couvercle (220) comprend une couche dure (220a) et une couche molle (220b) recouvrant la couche dure (220a).

5. Accessoire selon la revendication 4, dans lequel la partie magnétique (222) est disposée à l'intérieur d'une ouverture de la couche dure (220a).

6. Accessoire selon la revendication 4, dans lequel la partie de blindage (224) et la partie magnétique (222) se chevauchent.

7. Accessoire selon la revendication 4, dans lequel la partie de blindage (224) est transparente ou semi-transparente.

8. Accessoire selon la revendication 1 ou 4, comprenant en outre :
une pièce de logo (226), disposée dans la partie de couvercle (220) et chevauchant la partie de blindage (224).

9. Accessoire selon la revendication 1 ou 4, comprenant en outre :
une partie de couplage (210), connectée à la partie de couvercle (220) et adaptée pour être couplée au dispositif électronique portable (100).

10. Accessoire selon la revendication 9, comprenant en outre :
une partie flexible (230) connectant la partie de couvercle (220) à la partie de couplage (210).
